(19) Europäisches Patentamt
European Patent Office
Office européen des brevets

(11) Veröffentlichungsnummer: **0 101 780**
**A1**

# (12) EUROPÄISCHE PATENTANMELDUNG

(21) Anmeldenummer: 83100465.0

(22) Anmeldetag: 20.01.83

(51) Int. Cl.³: C 01 B 17/56
B 01 D 53/34

(30) Priorität: 07.08.82 DE 3229494

(43) Veröffentlichungstag der Anmeldung: 07.03.84 Patentblatt 84/10

(84) Benannte Vertragsstaaten: BE FR IT NL SE

(71) Anmelder: Hugo Petersen Ges. für verfahrenstechn. Anlagenbau mbH & Co KG
Postfach 4640
D-6200 Wiesbaden 1(DE)

(72) Erfinder: Petersen, Gerd, Dr.-Ing.
Am Birnbaum 4
D-6200 Wiesbaden 1(DE)

(72) Erfinder: Kijowsky, Norbert
Dantestrasse 17
D-6200 Wiesbaden 1(DE)

(72) Erfinder: Seipenbusch, Jürgen, Dipl.-Ing.
Mendelssohn-Bartholdy-Strasse 12
D-6200 Wiesbaden 1(DE)

## (54) Verfahren zur Reinigung von SO2-haltigen Gasen.

(57) Verfahren zur vollständigen Reinigung heißer $SO_2$-haltiger Röst- oder Verbrennungsgase von staubförmigen und sonstigen Verunreinigungen für die Herstellung von Schwefelsäure oder reinem Schwefeldioxid in einer drei Verfahrensschritte umfassenden Naß-Gasreinigungsanlage,

– in der das heiße Rohgas im ersten Verfahrensschritt in einem Wäscher (2) mit zirkulierender, verdünnter, heißer Schwefelsäure gekühlt und nahezu wasserdampfgesättigt wird,

– das aus dem ersten Verfahrensschritt kommende Gas im zweiten Verfahrensschritt in einem Füllkörperwaschturm (4) oder Gaskühler noch tiefer gekühlt, und der im Gas enthaltene Wasserdampf auskondensiert wird,

– ehe das Gas im dritten Verfahrensschritt einer Elektro-Naßreinigung (6) unterzogen wird,

wobei das nahezu wasserdampfgesättigte Gas aus dem ersten Verfahrensschritt vor Durchlaufen des zweiten Verfahrensschrittes durch Einspritzen (12) mit hinsichtlich der Sättigungstemperatur kälterer, verdünnter Schwefelsäure oder kälterem Wasser behandelt wird.

EP 0 101 780 A1

./...

Abb. 1

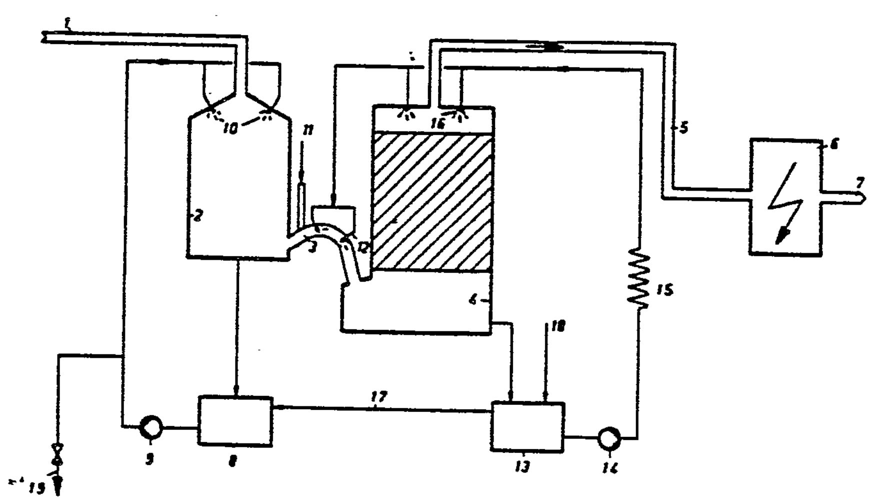

Hugo Petersen Gesellschaft
für verfahrenstechnischen
Anlagenbau mbH & Co KG
Postfach 46 4o

62oo Wiesbaden 1

527o Gummersb 0101780 198
P-PA 8211
Be./Al.

## Patentanmeldung

"Verfahren zur Reinigung von $SO_2$-haltigen Gasen"

Die Erfindung betrifft ein Verfahren zur vollständigen Reinigung heißer $SO_2$-haltiger Röst- oder Verbrennungsgase von staubförmigen und sonstigen Verunreinigungen für die Herstellung von Schwefelsäure oder reinem Schwefeldioxid in einer drei Verfahrensschritte umfassenden Naß-Gasreinigungsanlage,

- in der das heiße Rohgas im ersten Verfahrensschritt in einem Wäscher mit zirkulierender, verdünnter, heißer Schwefelsäure gekühlt und nahezu wasserdampfgesättigt wird,
- das aus dem ersten Verfahrensschritt kommende Gas im zweiten Verfahrensschritt in einem Füllkörperwaschturm oder Gaskühler noch tiefer gekühlt, und der im Gas enthaltene Wasserdampf auskondensiert wird,
- ehe das Gas im dritten Verfahrensschritt einer Elektro-Naßreinigung unterzogen wird.

$SO_2$-haltige Röst- oder Verbrennungsgase müssen vor der Weiterverarbeitung zur Schwefelsäure oder reinem Schwefeldioxid sorgfältig gekühlt und von staubförmigen und sonstigen Verunreinigungen gereinigt werden. Im heißen Gas befindlicher Flugstaub wird gegebenenfalls je nach Menge, Korngrößenverteilung und Staubwiderstand zunächst mechanisch in einem Zyklon und/oder in einer elektrischen Heiß-Gasreinigung, in einem Elektrofilter, abgeschieden.

./.

Die im heißen Gas noch vorhandenen staubförmigen und sonstigen, auch z.T. noch dampfförmig vorliegenden Verunreinigungen, wie beispielsweise Eisen-, Zink-, Blei-, Arsen- und Selen-Verbindungen, Quecksilber und Kohlenwasserstoffe, sowie gasförmiger Chlorwasserstoff, Fluorwasserstoff und Schwefeltrioxid, müssen vollständig aus dem Gas entfernt werden.

Aus der einschlägigen Literatur und aus der DE-PS 751 9o7 ist bekannt, das Gas in einer aus drei Verfahrensschritten bestehenden Naß-Gasreinigungsanlage zu behandeln. Für die Behandlung des $SO_2$-haltigen Gases werden in einem ersten Verfahrensschritt üblicherweise Waschtürme ohne Füllkörper oder Venturi-Wäscher oder kombinierte Wasch- und Kühltürme verwendet, in denen das Gas durch adiabatische Wasserverdampfung auf ca. 6o - 8o$^{o}$ C gekühlt und gewaschen wird. Dabei werden die im Dampf vorliegenden Verunreinigungen weitgehend kondensiert und in der üblicherweise zirkulierenden Waschflüssigkeit, einer maximal 3o-5o%igen Schwefelsäure, die kontinuierlich aus dem Waschflüssigkeitskreislauf abgegeben und durch Frischwasser und/oder rückgeführtes Kondensat ergänzt wird, angereichert. Gasförmige Verunreinigungen, wie beispielsweise Salzsäure oder Fluorwasserstoff, werden im Wäscher ebenfalls zum Teil abgeschieden. Das Gas ist nach dieser Wäsche nahezu wasserdampfgesättigt.

In einem zweiten Verfahrensschritt wird nun das Gas aus dem ersten Verfahrensschritt zur Verminderung des Wasser-Gehaltes gekühlt. Dabei durchströmt das Gas entweder einen mit Füllkörpern versehenen Waschturm mit im Kreislauf geführter Waschflüssigkeit, wobei die erwärmte Flüssigkeit in einem separaten Kühler stets zurückgekühlt wird, oder einem indirekten Gaskühler, wobei in diesem Fall das anfallende Kondensat der zirkulierenden Waschflüssigkeit im ersten Verfahrensschritt wieder zugesetzt wird.

./.

Das derart behandelte Gas wird anschließend zur vollständigen Entfernung von Verunreinigungen in einem dritten Verfahrensschritt einer Elektro-Naßreinigung unterworfen.

Die Verwendung von Waschtürmen vor der Elektro-Naßreinigung im dritten Verfahrensschritt bewirkt nicht nur die unmittelbare Entfernung von groben Verunreinigungen, sondern ermöglicht auch aufgrund der in den Waschtürmen, insbesondere im zweiten Waschturm,vorliegenden Bedingungen die Abscheidung von agglomerierbaren Feinstteilchen unter o,5 $\mu$m in der den Waschtürmen nachgeschalteten Elektro-Naßreinigung.

All diese Verfahrensweisen haben jedoch den Nachteil, daß die Verweilzeit des den zweiten Waschturm durchströmten Gases für eine Agglomeration der Feinstteilchen zu kurz ist, um eine wirtschaftliche Abscheidung durch die Elektro-Naßreinigung zu gewährleisten.

Der Erfindung liegt daher die Aufgabe zugrunde, ein Verfahren zur vollständigen Naß-Gasreinigung heißer $SO^2$-haltiger Röst- und Verbrennungsgase von staubförmigen und sonstigen Verunreinigungen für die Herstellung von Schwefelsäure oder reinem Schwefeldioxid in einer eingangs beschriebenen Anlage aufzuzeigen, durch das die Abscheidung von Feinstteilchen unter 1 $\mu$m aus dem $SO^2$-haltigen Gas in verfahrenstechnischer als auch im Hinblick auf die Größe von Anlagekomponenten in wirtschaftlicher Weise erheblich verbessert wird.

Die Aufgabe wird erfindungsgemäß dadurch gelöst, daß das nahezu wasserdampfgesättigte Gas aus dem ersten Verfahrensschritt vor Durchlaufen des zweiten Verfahrensschrittes durch Einspritzen mit hinsichtlich der Sättigungstemperatur kälterer, verdünnter Schwefelsäure oder kälterem Wasser behandelt wird.

./.

Das Einspritzen oder Eindüsen von kalter, verdünnter Schwefelsäure oder von kaltem Wasser in das nahezu wasserdampfgesättigte Gas bewirkt, daß in der Flugbahn jedes einzelnen Flüssigkeitstropfens eine Gaskühlung und durch Mischung mit ungekühltem Gas eine Wasserdampfübersättigung und damit Nebelbildung im Gas auftritt. Durch diese Maßnahme werden nach den vorliegenden Kenntnissen die Teilchen größer 1 µm weniger berührt. Bei den feinsten Teilchen unter 0,5 bis 1 µm jedoch wird durch Agglomeration der Schadstoff- und Nebelteilchen sowie einer erheblich verlängerten Verweilzeit bis zur Elektro-Naßreinigung eine sehr starke Teilchenvergrößerung hervorgerufen. Dies führt zu einer sehr vereinfachten und schnellen Abscheidung der agglomerierten Teilchen, wodurch in vorteilhafter Weise die Elektro-Naßreinigung in baulicher Hinsicht merklich verkleinert und vereinfacht wird bzw. wodurch sogar teure Elektrofilter durch einfache mechanische Naßabscheider ersetzbar werden.

In einer weiteren Ausgestaltung der Erfindung wird vorgeschlagen, daß die Temperatur der verdünnten Schwefelsäure oder des Wassers um vorzugsweise mehr als lo° C niedriger als die Sättigungstemperatur des Gases ist.

Vorteilhaft für das Verfahren ist eine Temperaturdifferenz von 15 bis 2o° C, so daß beispielsweise bei einer Sättigungstemperatur des Gases von 5o - 6o° C die Temperatur der eingespritzten kälteren Flüssigkeit 3o bis 45° C beträgt. Dabei ist entscheidend, daß für die Teilchenvergrößerung weder die Sättigungstemperatur der Gase über 4o° C noch eine bestimmte Temperaturdifferenz maßgebend sind.

Ferner wird vorgeschlagen, daß die Konzentration der verdünnten Schwefelsäure maximal 2o % ist.

./.

Durch Versuche wurde aber ermittelt, daß die optimale Konzentration der verdünnten Schwefelsäure bei lo % liegt.

Ein weiterer Vorschlag bezieht sich auf die eingespritzte Menge an kalter, verdünnter Schwefelsäure oder an kaltem Wasser, die mindestens o,1 $l/m^3$ Gas, vorteilhafterweise zwischen 1 bis 3 $l/m^3$ Gas beträgt.

Im Rahmen der erfindungsgemäßen Aufgabenlösung wird auch vorgeschlagen, daß die Relativgeschwindigkeit zwischen den eingespritzten kalten Flüssigkeitstropfen und dem Gas im Eingangsbereich der Einspritzung im Mittel mindestens 8m/s beträgt. Um diesen Wert zu erreichen, muß bei einer Einspritzung der Flüssigkeit in das Gas mittels einer Düse der erforderliche Verdüsungsdruck mindestens 0,5 bar betragen. Die kleinste Flüssigkeitsmenge soll mindestens bei 0,1 $l/m^3$ Gas liegen. Vorteilhaft ist es jedoch, die eingedüste Flüssigkeitsmenge bei 1 bis 3 $l/m^3$ Gas zu halten und einen Flüssigkeitsdruck von 2 bis 3 bar zu wählen. Mit steigender Flüssigkeitsmenge und höherem Eindüsdruck wird der gewünschte Effekt der Teilchenvergrößerung noch größer, wobei die Erhöhung des Eindüsdruckes selbst über 20 bar hinaus sich sehr positiv auswirkt. Der optimale Wert für die Flüssigkeitsmenge liegt dagegen bei 4 $l/m^3$ Gas. Im Falle einer Flüssigkeitseintragung mittels eines mechanischen Flüssigkeitsverteilers, beispielsweise eines Rotationsverteilers, soll dessen Umfanggeschwindigkeit mindestens 8 m/s betragen.

In einer weiteren Ausgestaltung der Erfindung wird vorgeschlagen, daß die aus dem ersten Verfahrensschritt kommenden Gase vor der Einspritzung von kalter, verdünnter Schwefelsäure zusätzlich mit kalter Luft und/ oder Wasserdampf behandelt werden, um eine möglichst 100%ige Wasserdampfsättigung der Gase zu erreichen.

./.

Das erfindungsgemäße Verfahren soll anhand von drei, in dem beigefügten Verfarensschema dargestellten, bevorzugten Ausführungsbeispielen einer Naß-Gasreinigungsanlage näher erläutert werden. Es zeigen:

Fig. 1 das erfindungsgemäße Verfahren, bei dem zwischen dem ersten und zweiten Verfahrensschritt kalte Luft und anschließend kalte, verdünnte Schwefelsäure in den Gasreinigungsprozeß eingebracht werden.

Fig. 2 das erfindungsgemäße Verfahren, bei dem anstelle von kalter Luft Wasserdampf verwendet wird und die Zugabe an kalter, verdünnter Schwefelsäure in eine leere, dem Füllkörperwaschturm unmittelbar vorgeschaltete Kammer erfolgt,

Fig. 3 das erfindungsgemäße Verfahren, bei dem zwischen dem ersten und zweiten Verfahrensschritt dem Gas leicht erwärmte, angefeuchtete Luft und Wasserdampf zugegeben werden, bevor diesem in einem dem zweiten Waschturm vorgeschalteten Behälter kalte, verdünnte Schwefelsäure zugegeben wird.

./.

Gemäß Abb. 1 treten in einem ersten Verfahrensschritt durch die Leitung 1 25o bis 3oo$^{o}$ C heiße, $SO_2$-haltige Röstgase in den oberen Teil eines ersten leeren Waschturms 2 ein. Die Gase werden in diesem Turm mit heißer, dünner Schwefelsäure von 5 bis 2o % $H_2SO_4$ im Gleichstrom in Berührung gebracht, die ohne Kühlung über den Behälter 8 und die Pumpe 9 im Kreislauf geführt wird. Die Säure wird durch die Düsen lo direkt in die im Gleichstrom eintretenden heißen Röstgase verdüst. Dabei setzt sofort eine starke, adiabatische Verdampfung von Wasser und in der Folge die Kühlung der heißen Gase ein, die im unteren Teil des ersten Waschturms 2 wasserdampfgesättigt und fastbis auf den Taupunkt gekühlt durch die Leitung 3 den Turm verlassen. Die Gastemperatur liegt in diesem Ausführungsbeispiel bei 62$^{o}$ C, die Sättigungstemperatur bei 58$^{o}$ C. Die die Verunreinigungen enthaltende Schwefelsäure wird bei 19 als Waschsäure der Anlage entnommen. Nach dieser Gasvorbereitung folgt nun das erfindungsgemäße Einspritzen von kalter, dünner Schwefelsäure aus dem Waschflüssigkeitskreislauf des zweiten mit Füllkörper gefüllten Waschturms 4 durch die Düsen 12 in die die beiden Waschtürme 2, 4 verbindende Gasrohrleitung 3, wobei die Einspritzflüssigkeit in Säurekühlern 15 gekühlt mit einer Tempera-

./.

tur von 38° C zur Verfügung steht. Zur vollständigen Sättigung der Gase wird bei 11 zusätzlich feuchte, kalte Luft zugemischt. Dabei fällt die Gastemperatur auf 57° C und das Gas ist somit wasserdampfgesättigt.

Im zweiten Verfahrensschritt erfolgt in dem zweiten Füllkörperwaschturm 4 die weitere Waschung und Kühlung der Gase im Gegenstrom bei 4o° C. Neben der Waschung des Gases fließt die durch Wasserkondensation erwärmte Säure aus dem unteren Teil des Waschturms in den Behälter 13, wird von dort durch die Pumpe 14 über den Kühler 15 in den Kopf des zweiten Waschturms 4 zurückgepumpt und durch die Düsen 16 auf den Füllkörpern verteilt aufgegeben. Überschüssige Flüssigkeit fließt durch die Leitung 17 in den Auffangbehälter 8 des ersten Waschturms 2, dessen Flüssigkeitsstand durch die laufende Wasserverdampfung fällt. Falls die Wasserverdampfung im ersten Waschturm 2 größer ist als die Wasserkondensation im zweiten Waschturm 4, muß bei 18 dem Waschflüssigkeitskreislauf zusätzlich Wasser zugesetzt werden. Die gekühlten und für die Elektro-Filtration vorbereiteten Gase werden durch die Gasleitung 5 den Elektronaßfiltern 6 zugeführt. Sie verlassen diese über die Leitung 7 gereinigt für die weitere Verarbeitung zur Herstellung von Schwefelsäure oder reinem Schwefeldioxid.

Ein weiteres Ausführungsbeispiel des erfindungsgemäßen Verfahrens ist in dem Schema Fig. 2 dargestellt. Ähnlich dem ersten Ausführungsbeispiel werden 21o° C heiße Gase, die neben 1o,5 Vol% $SO_2$ und 3,8 Vol% $O_2$ bereits 18 Vol% Wasserdampf enthalten, im ersten Waschturm durch adiabatische Wasserverdampfung aus heißer, zirkulierender, verdünnter Schwefelsäure im Gegenstrom gekühlt und angefeuchtet.

Nun wird Wasserdampf 2o in die den ersten Waschturm der die Gasleitung 3 verlassenden Gase zur vollständigen Sättigung eingeblasen, so daß die Gase in den unteren Teil des zweiten Waschturmes 4 mit einer Sättigungstemperatur von 65 - 66° C eintreten. Dem zweiten

./.

Waschturm 4 ist im unteren Teil ein leerer Raum vorgeschaltet, in dem die Eindüsung von kalter Waschflüssigkeit aus dem Waschflüssigkeitskreislauf des zweiten Waschturmes 4 erfolgt. Die Menge dieser Einspritzflüssigkeit ist auf 2 - 3 $l/m^3$ Gas eingestellt. Die Flüssigkeit wird in einem besonderen Kühler 21 bis auf 35° C gekühlt. Die weitere Behandlung der Gase erfolgt in der gleichen Weise wie im ersten Beispiel.

Im dritten in Fig. 3 veranschaulichten Ausführungsbeispiel erfolgt die Kühlung und Anfeuchtung der heißen Röstgase in einem mit Füllkörpern gefüllten ersten Waschturm 2'. Die Gase treten dabei unten in den Turm über die Rohrleitung 1 ein und werden in der Füllkörperschicht im Gegenstrom mit heißer Schwefelsäure in innigen Kontakt gebracht. Diese Säure verläßt den ersten Waschturm im unteren Teil, gelangt in den Behälter 8 und wird durch die Pumpe 9 in den Kopf des Waschturms 2 zurückgepumpt, wo sie mit Hilfe der Düsen lo gleichmäßig über den Querschnitt des mit Füllkörpern versehenen Turmes verteilt wird. Zur Erreichung einer vollkommenen Anfeuchtung wird Luft durch die Leitung 11 über den Stripper-Behälter 22 angesaugt, wo mittels der Luft einem Teil der dem Waschflüssigkeitskreislauf des ersten Waschturms zugehörigen Waschsäure, die durch die Leitung 19 dem Behälter 22 zugegeben wird, das Schwefeldioxid ausgetrieben wird. Die bei dem Stripp-Vorgang erwärmte und angefeuchtete Luft gelangt durch die Leitung 23 in die Gasleitung 3, in die anschließend zusätzlich über die Leitung 2o noch Wasserdampf oder evtl. auch heißes Wassers eingeführt werden kann. Nun erst erfolgt die Behandlung des wasserdampfgesättigten Gases mit kalter, 3-8 %iger Schwefelsäure. Eine getrennte Pumpe 25 sorgt in diesem Fall für einen besonders hohen Flüssigkeitsdruck von 3,5 bar an den Einspritzdüsen der kalten.dünnen Säure 12. Dieser Vorgang findet in einem besonderen leeren Behälter 24 und zusätzlich in dem unteren leeren Teil des zweiten Waschturms 4 statt.

Die weitere Behandlung des Gases, d. h. die Waschung und die Kühlung sowie die Elektrofiltation, wird in gleicher Weise vorgenommen, wie bereits in den beiden zuvor genannten Ausführungsbeispielen dargelegt worden ist.

Hugo Petersen Gesellschaft
für verfahrenstechnischen
Anlagenbau mbH & Co KG
Postfach 46 4o

62oo Wiesbaden 1

527o Gummersbach, den 26.o7.1982

P-Pa 8211

Be./Al.

## Patentansprüche

1. Verfahren zur vollständigen Reinigung heißer $SO_2$-haltiger Röst- oder Verbrennungsgase von staubförmigen und sonstigen Verunreinigungen für die Herstellung von Schwefelsäure oder reinem Schwefeldioxid in einer drei Verfahrensschritte umfassenden Naß-Gasreinigungsanlage,
   - in der das heiße Rohgas im ersten Verfahrensschritt in einem Wäscher mit zirkulierender, verdünnter, heißer Schwefelsäure gekühlt und nahezu wasserdampfgesättigt wird,
   - das aus dem ersten Verfahrensschritt kommende Gas im zweiten Verfahrensschritt in einem Füllkörperwaschturm oder Gaskühler noch tiefer gekühlt, und der im Gas enthaltene Wasserdampf auskondensiert wird,
   - ehe das Gas im dritten Verfahrensschritt einer Elektro-Naßreinigung unterzogen wird, d a - d u r c h g e k e n n z e i c h n e t, daß das nahezu wasserdampfgesättigte Gas aus dem ersten Verfahrensschritt vor Durchlaufen des zweiten Verfahrensschrittes durch Einspritzen mit hinsichtlich der Sättigungstemperatur kälterer, verdünnter Schwefelsäure oder kälterem Wasser behandelt wird.

2. Verfahren nach Anspruch 1, d a d u r c h g e - k e n n z e i c h n e t, daß die Temperatur der verdünnten Schwefelsäure oder des Wassers um vorzugsweise mehr als lo$^{o}$ C niedriger als die Sättigungstemperatur des Gases ist.

./.

3. Verfahren nach den Ansprüchen 1 und 2, dadurch gekennzeichnet, daß die Konzentration der verdünnten Schwefelsäure maxiaml 2o % ist.

4. Verfahren nach den Ansprüchen 1 bis 3, dadurch gekennzeichnet, daß die eingespritze kalte, verdünnte Schwefelsäuremenge bzw. die kalte Wassermenge mindestens o,1 $l/m^3$ Gas beträgt.

5. Verfahren nach den Ansprüchen 1 bis 4, dadurch gekennzeichnet, daß die Relativgeschwindigkeit zwischen den eingespritzten kalten Flüssigkeitstropfen und dem Gas im Eingangsbereich der Einspritzung im Mittel mindestens 8 m/s beträgt.

6. Verfahren nach den Ansprüchen 1 bis 5, dadurch gekennzeichnet, daß den aus dem ersten Verfahrensschritt kommenden Gasen vor der Einspritzung von kalter, verdünnter Schwefelsäure zusätzlich kalte Luft und/oder Wasserdampf zugesetzt wird.

./.

Abb. 1

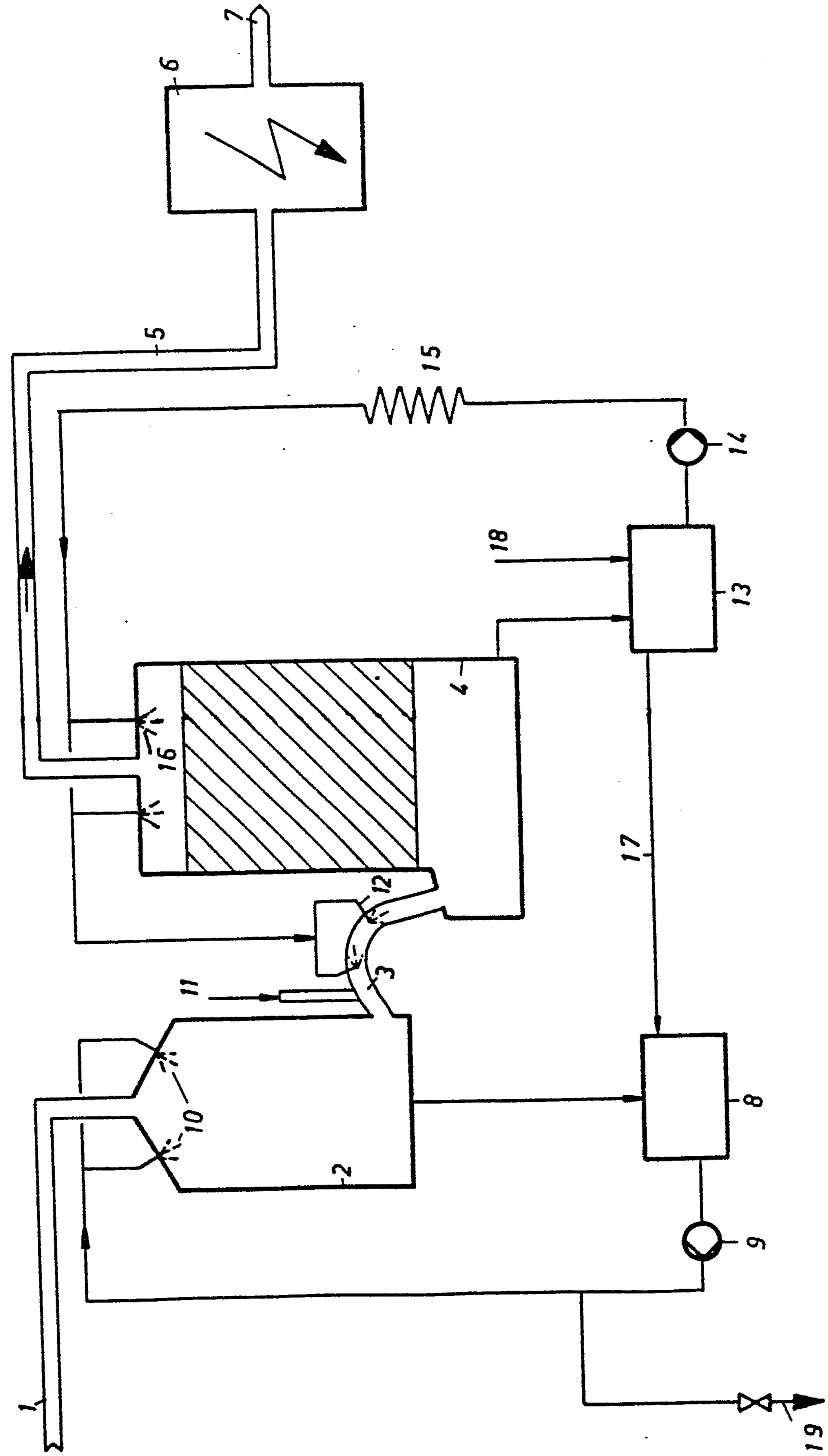

Abb. 2

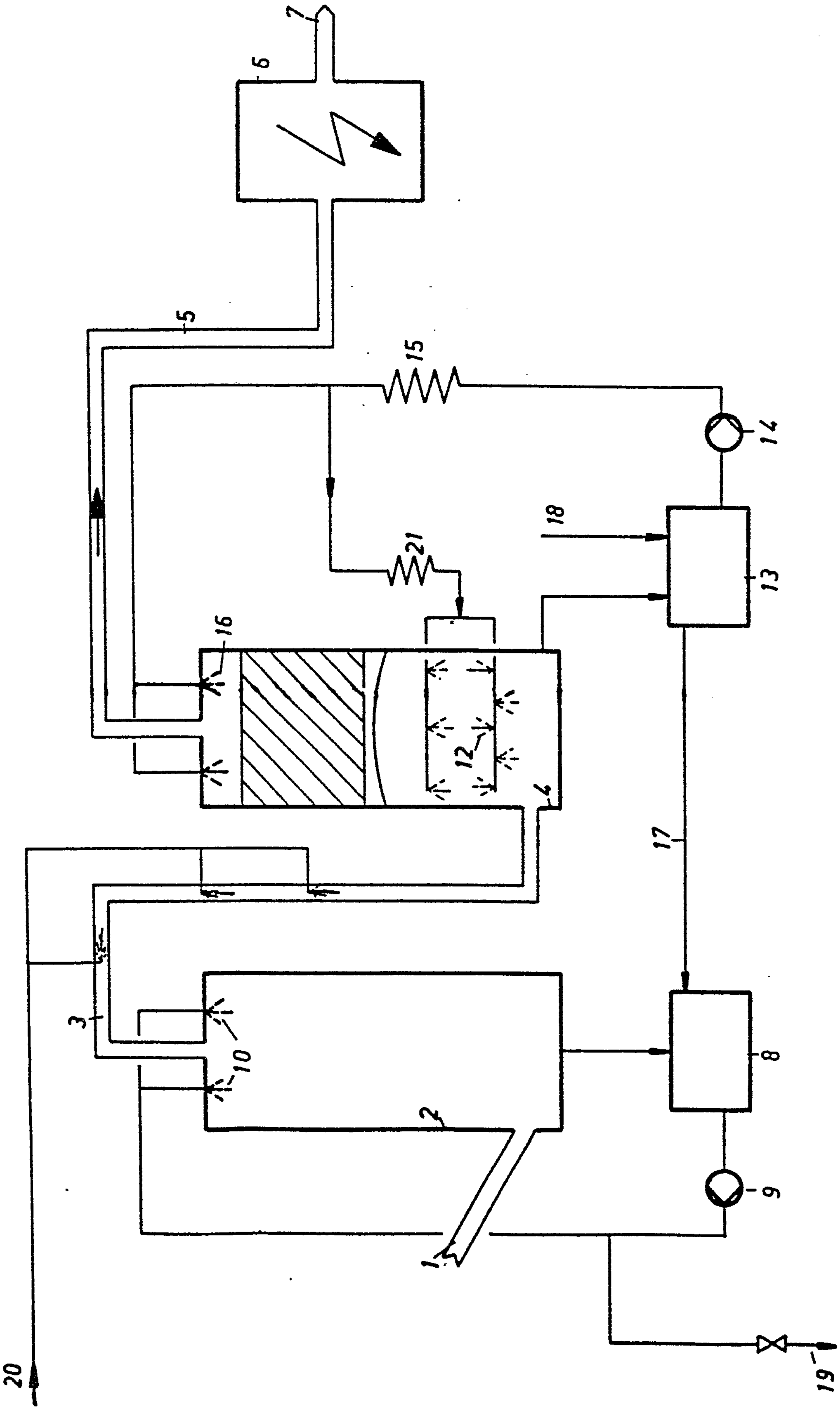

3/3

0101780

Abb. 3

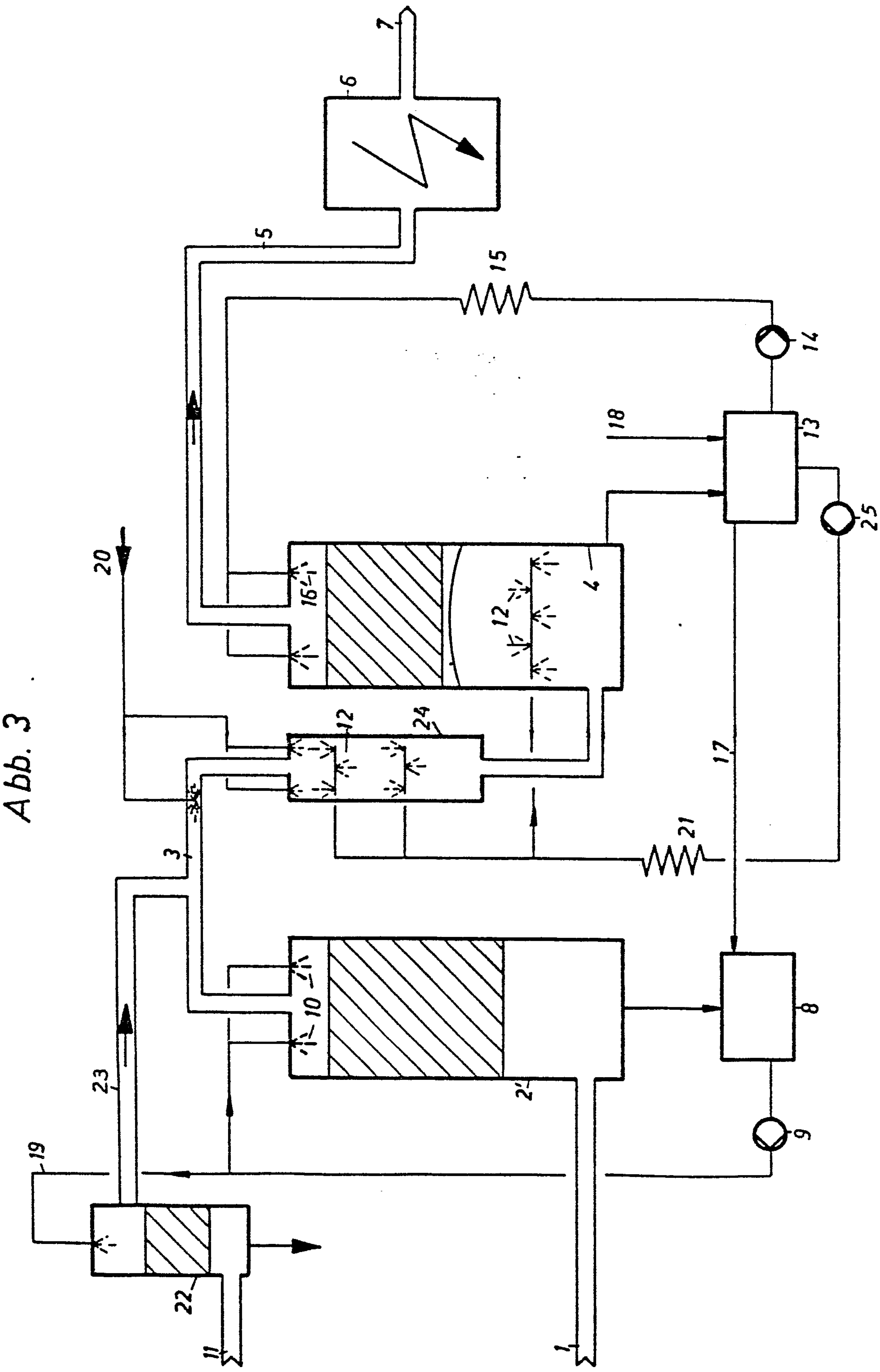

0101780

Europäisches Patentamt

# EUROPÄISCHER RECHERCHENBERICHT

Nummer der Anmeldung

EP 83 10 0465

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-2 710 627 (METALLGESELLSCHAFT AG) * Ganzes Dokument * --- | 1 | C 01 B 17/56<br>B 01 D 53/34 |
| A | US-A-2 598 116 (H.A. DU BOIS) --- | | |
| A | US-A-1 943 137 (E.J. MULLEN) --- | | |
| A | DE-C- 751 908 (METALLGESELLSCHAFT AG) --- | | |
| D,A | DE-C- 751 907 (METALLGESELLSCHAFT AG) ----- | | |
| | | | RECHERCHIERTE SACHGEBIETE (Int. Cl 3) |
| | | | C 01 B 17/00 |

Der vorliegende Recherchenbericht wurde für alle Patentansprüche erstellt.

| Recherchenort | Abschlußdatum der Recherche | Prüfer |
|---|---|---|
| BERLIN | 05-10-1983 | ASSOGNA R. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82